# EUROPÄISCHE PATENTSCHRIFT

(11) **EP 1 144 865 B1**
(45) Veröffentlichungstag und Bekanntmachung des Hinweises auf die Patenterteilung: **18.06.2003**
(21) Anmeldenummer: 00987115.3
(22) Anmeldetag: 08.11.2000
(51) Int. Cl.: F03D 3/00, F03D 3/04

(54) **ANLAGE ZUR WIND- BZW. WASSERENERGIENUTZUNG**
METHOD FOR UTILIZING THE ENERGY OF WIND OR WATER
DISPOSITIF POUR EXPLOITATION DE L'ENERGIE DE L'EAU OU DU VENT

(30) Priorität: 11.11.1999 DE 19956064
(43) Veröffentlichungstag der Anmeldung: 17.10.2001
(73) Patentinhaber: Missler, Hans-Dieter, 12103 Berlin (DE)
(72) Erfinder: Missler, Hans-Dieter, 12103 Berlin (DE)
(86) Internationale Anmeldenummer: DE0003959
(87) Internationale Veröffentlichungsnummer: WO01034975

(56) Entgegenhaltungen:
- DE-A- 3 246 558
- DE-A- 3 246 694
- DE-A- 3 303 898
- DE-A- 3 800 070
- DE-A- 3 828 361
- GB-A- 251 624

## Beschreibung

Die Erfindung betrifft ein, aus mindestens einem oder mehreren zylinderförmigen Rotoren bestehenden Wind- bzw. Wasserkrafträdern mit einer oder mehreren Drehachsen senkrecht oder waagerecht zur Fluidrichtung und je einer kreisförmigen Endscheibe an beiden Enden des Wind- oder Wasserrades, wobei ein oder mehrere Rotorflügel mit einem stromlinienförmigen oder anderen auftriebs- bzw. widerstandsoptimalen Profil um einen sich exzentrisch um seine Längsachse drehenden zylindrischen Rotor kreisen. Die Rotorflügel werden mittels elektrisch angetriebener Verstellelemente an den Enden ihrer Längsachse in Beziehung zu den jeweiligen effektiven Anstellwinkels zum anströmenden Fluid, in dem jeweiligen Kreissegmenten gedreht. Der bzw. die im anströmenden Fluid elektromechanisch angetriebenen drehenden Zylinder erzeugen auf der Unterdruckseite eine beschleunigte Zirkulationsströmung, die sich aus dem anströmenden Wind und der Zirkulationsströmung zusammensetzt, so dass die sich im Leistungsbereich um den Zylinder drehenden aerodynamischen geformten Flügel das erzeugte Auftriebsmoment in mechanische bzw. clektrische Energie umwandelt.
Nach A. Flettner ist bekannt, daß senkrecht stehende Rotoren auf einem relativ zum Wind beweglichen Objekt in Rotation zu versetzen sind. Es entsteht auf Grund des Magnuseffektes eine Kraft die quer etwa 90Grad zur anströmenden Wind- bzw. Fluidrichtung verläuft und das Objekt entsprechend bewegt. In der Zeit zwischen den Jahren 1924 bis 1926 sind diese Rotoren als Antrieb auf Schiffen verwendet worden.

Eine Wind- bzw. Wasser- oder sonstige Fluidenergienutzung wird durch die Erfindung unter Anspruch 1 bis 10 in mechanische bzw. elektrische Energie umgewandelt.

Aus der Patentschrift DE 33 03 898 C2 des Prof. Walter Tepe, ist cine Windkraftmaschine bekannt, die auf dem Prinzip, den anströmenden Wind durch einen rotierenden zylindrischen Rotor umzulenken und die dadurch erhöhte Windgeschwindigkeit auf der Unterdruckseite so zu nutzen, daß ein oder mehrere konzentrisch freilaufende Flügelringe durch ihren Widerstandsbeiwert, über einen Generator die mechanische in die elektrische Energie umwandelt.
Die Nachteile der genannten Patentschrift sind die auf der Druckseite entstehenden Leistungsverluste der rücklaufenden Flügel, die nicht verstellbar sind und deren Abstand zum rotierenden Zylinder an der Druckseite des Rotors zu groß ist. Weiterhin kann die Translationsbewegungsenergie nicht genutzt werden. Es sind keine Leistungsverstärkenden Vorrichtungen beschrieben, die eine Vergrößerung der Windangriffsfläche zeigen.

Ausgehend hiervon liegt der Erfindung die Aufgabe zugrunde, die vorgenannte Vorrichtung in ihren Wirkungsgraden zu verbessern und die Translationsbewegungsenergie in zusätzlich nutzbare mechanische bzw. elektrische Energie umzuwandeln sowie außer in Luft auch in anderen wie gasförmigen, oder flüssigen Medien genutzt werden.

Die Lösung dieser Aufgabe liegt im Gegensatz zur oben erwähnten Patentschrift in der Kombination aus:
- der oder den exzentrisch verlegten Zylinderachse/n zu den freilaufenden Flügelrädern;
- sowie der elektrisch einzeln verstellbaren Flügelelemente auf der Umlaufbahn,
- sowie der an der Drehachse der Flügel angebrachten Gegengewichte, welche die Fliehkräfte und Flügeldrücke am anströmenden Profil und der beweglichen Stellelemente permanent ausgleichen;
- sowie eine zweite Turbine im Abstand der mindestens doppelten Dicke des Strömungsfeldes bzw. Leistungsbereiches auf gleicher Höhe angeordnet in umgekehrter Drehrichtung laufenden Zylinderturbine die den Leistungsbereich zwischen den Turbinen vergrößert;
- sowie der Umsetzung der Translationsbewegungsenergie unter Nutzung der Bewegung der einzelnen Turbinen zueinander, welche durch die sich gegenüber liegenden Unterdruckseiten (bei in Rotation befindlichen Zylindern) Kraft erzeugen und diese sich zueinander bewegen. Über Linearführungen, die unter und über den Turbinen, werden ein bzw. zwei Kurbeltrieb/e über Pleulstangen in Schwingung versetzt und mittels eines angeschlossenen Ringgenerators in nutzbare Energie umwandeln;
- sowie eine weitere Erhöhung der Windgeschwindigkeit vor der Turbine durch angesetzte Wind-Fluidfangflügel, welche die mindestens vierfache Fangfläche der Arbeitsturbinenfläche umfassen;
- sowie ein Mast, auf welchem die gesamte vorgenannte Vorrichtung (mittels elektrisch verstellbarem Drehkranz elektronisch gesteuert durch eine Windrichtungsmessanlage) einschl. Windfangflügel und der Turbinen optimal 90 Grad zum horizontalen Wind ausgerichtet wird.

Die Vorteile der Erfindung
im Bezug zu herkömmlichen Windkraftanlagen ist als Vorteil:
a) die Kompaktheit der Anlage
b) der geräuscharme Betrieb
c) keine Schlagschattenbildung
d) wesentlich kleinere Abmaße bei gleicher Nennleistung
e) der Energiegewinn ab 2m/s freier Windgeschwindigkeit
f) die Sturmsicherheit und beibehalten des Betriebes bei Windgeschwindigkeit über 25m/s
g) der Aufbau in Wohn- und Gewerbegebiete direkt am Verbraucher
zu nennen.

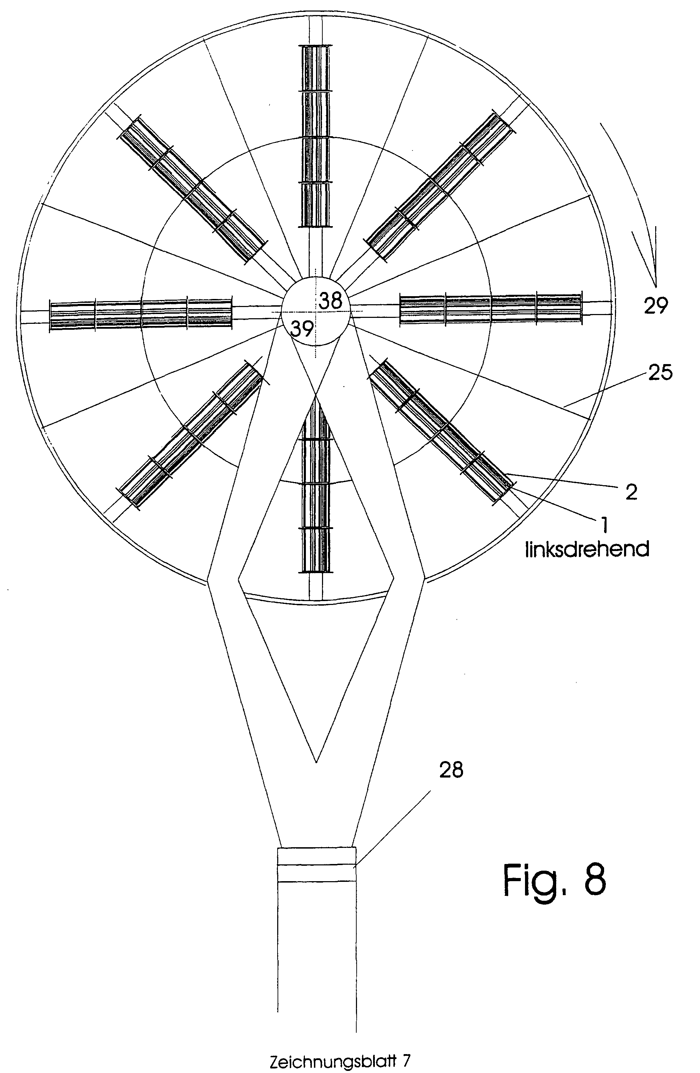

Auch ist es nach der Erfindung möglich daß zur Nutzung der entstehenden Translationsbewegungsenergie (Magnuseffekt) eine Vorrichtung hergestellt wird, welche eine oder mehrere Turbinen einschl. der Windfangflügel (25) und Achsen zentrisch am horizontal gelagerten Kopf (37) drehbar auf einem gemeinsamen Mast montiert ist, wobei die Turbinen alle im gleichen Drehsinn arbeiten und dadurch die Translations- Energie-Bewegung vervielfachen. Die daraus entstehende Drehbewegung am Kopf des Standmastes wirkt wie ein Horizontalwindkraftrad Fig. 8 und wird durch eine getriebe- oder getriebelose Übersetzung in mechanische oder elektrische Energie umgewandelt.

Folgende Konstruktionszeichnungen sind nachstehend beschrieben:
- Fig.1: Strömungsprinzip nach der Erfindung mit einem Rotor einschl. des schematisch dargestellten Düseneffektes in der Draufsicht.
- Fig.1a: Strömungsprinzip nach der Erfindung mit einem Rotor einschl, des schematisch dargestellten Düseneffektes in der Draufsicht ohne rückwärtige Windableitflügel.
- Fig.2: Strömungsprinzip nach der Erfindung mit zwei Rotoren einschl. des schematisch dargestellten Düseneffektes in der Draufsicht.
- Fig.3: Ausführungsbeispiel der Erfindung in der.Vorderansicht.
- Fig.4: Ausführungsbeispiel der Erfindung in der Seitenansicht.
- Fig.5: Ausführungsbeispiel eines Profilflügels einschl. Endscheibe, Gegengewichte und Verstelleinrichtung.

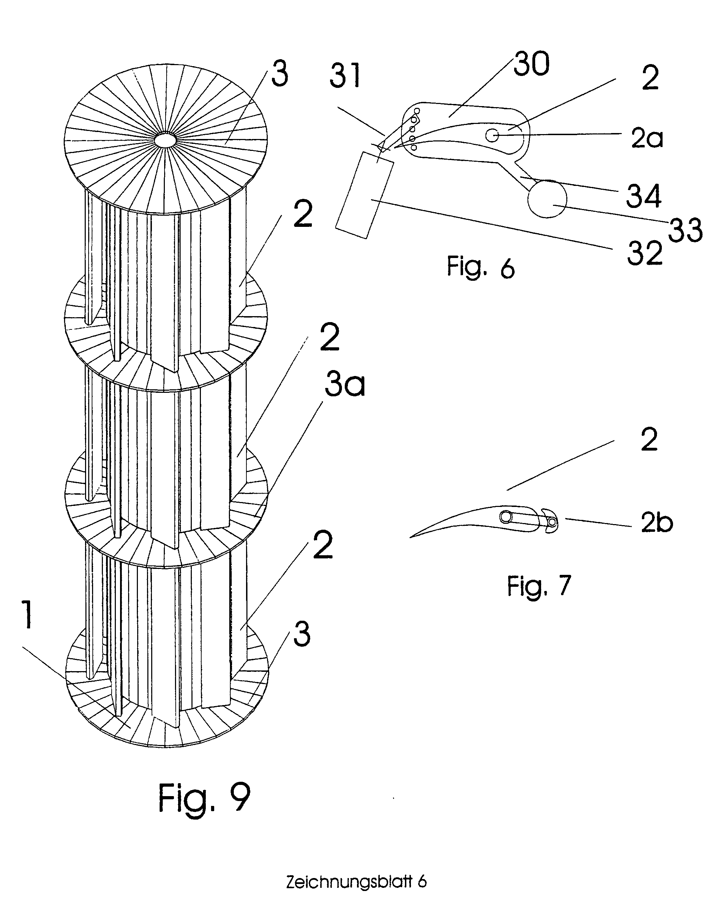

- Fig.6: Ausführungsbeispiel eines Profilflügels einschl. Vorflügel.
- Fig.7: Ausführungsbeispiel der Erfindung in der Draufsicht.
- Fig.8: Windenergieanlage mit gemeinsamer horizontaler Drehachse.
- Fig.9: Ausführungsbeispiel einer gegliederte Turbine.

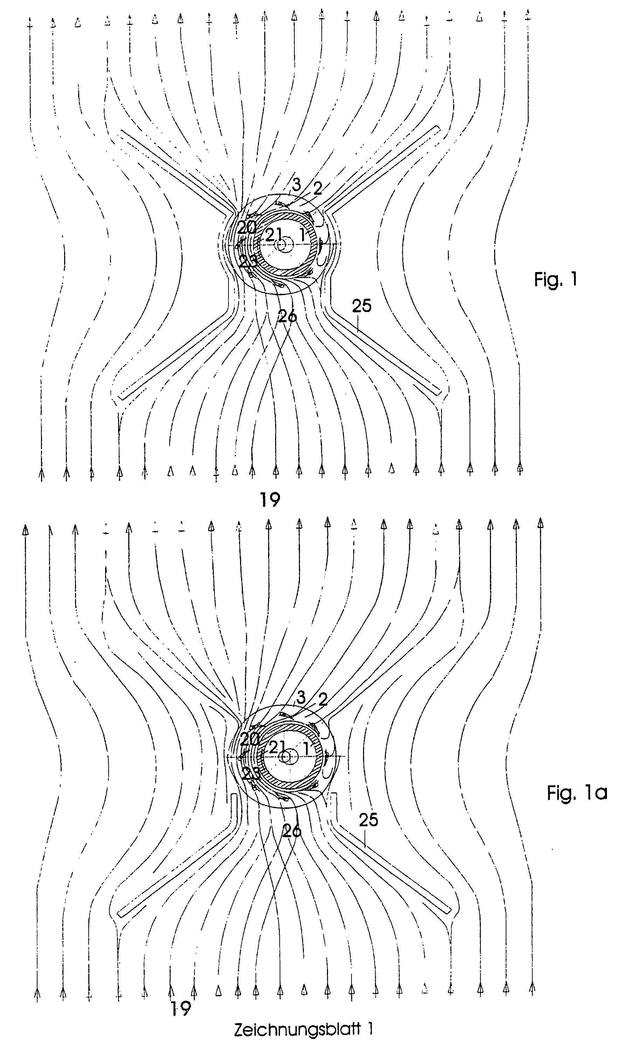

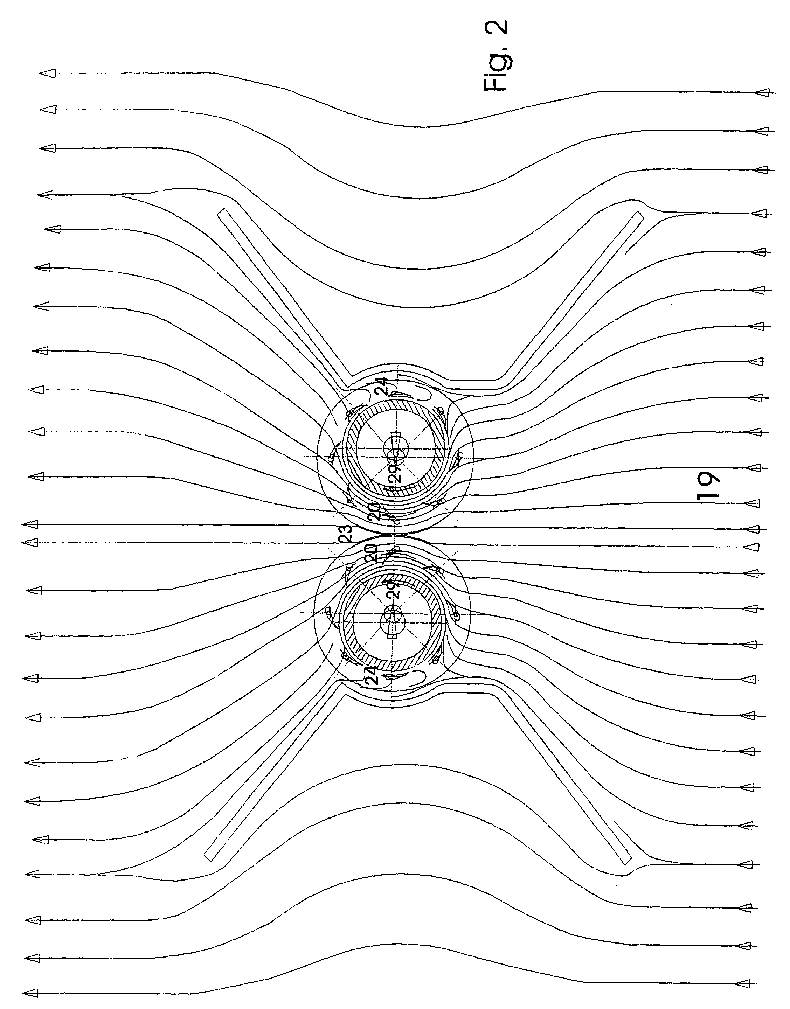

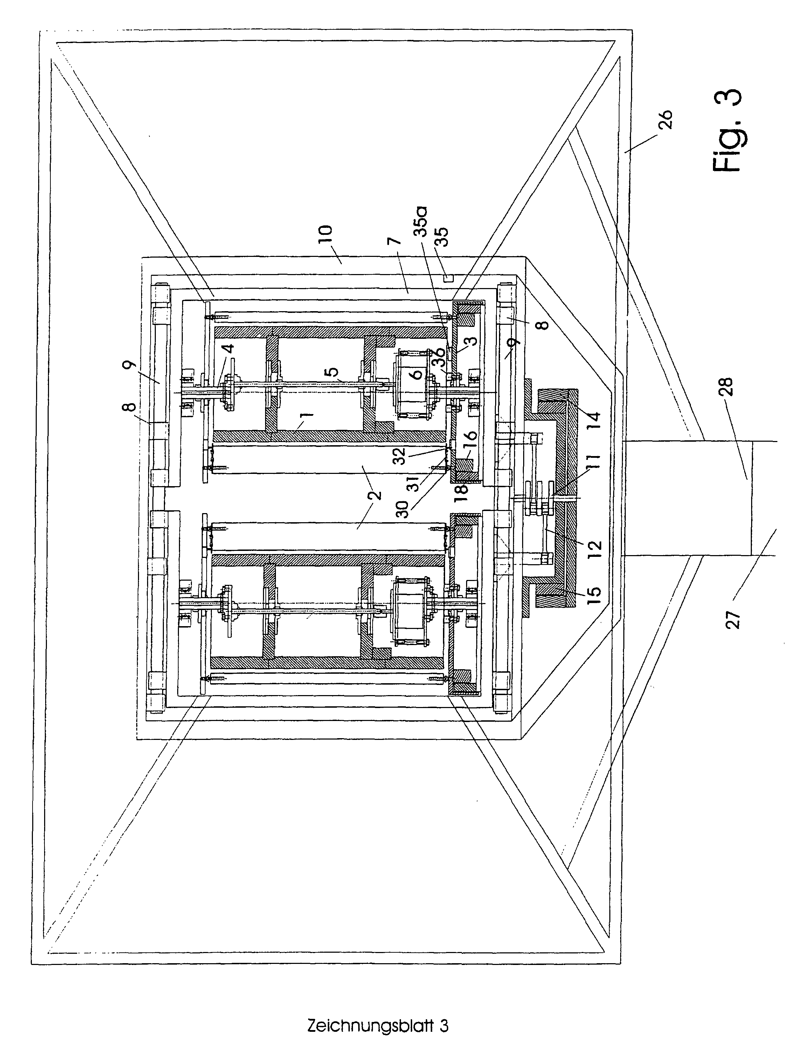

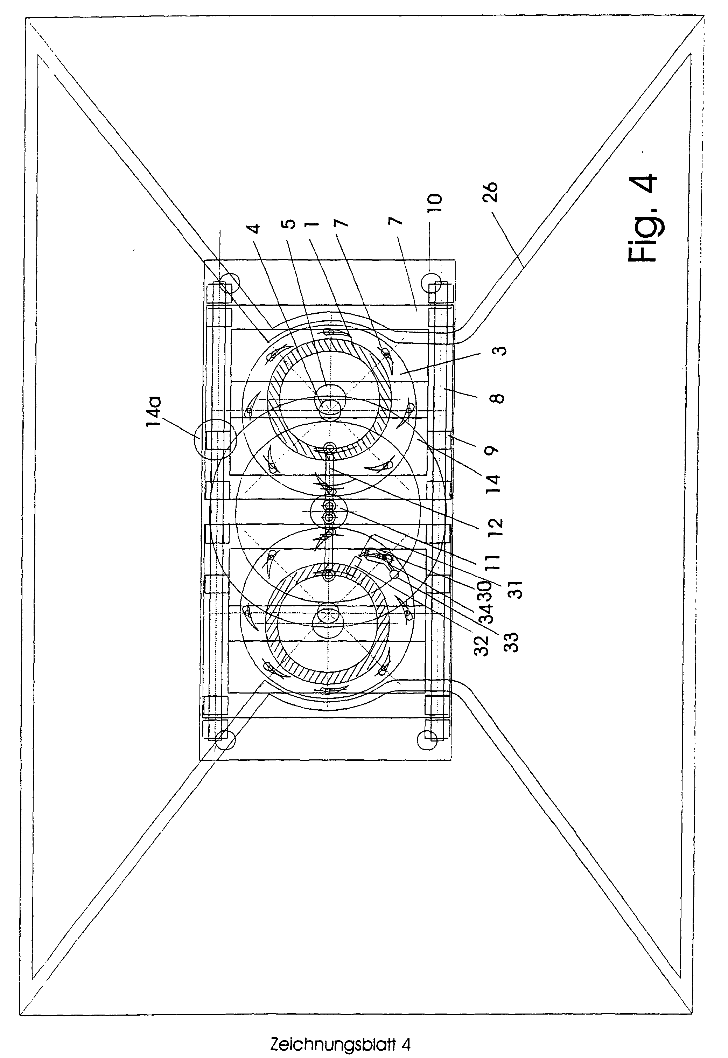

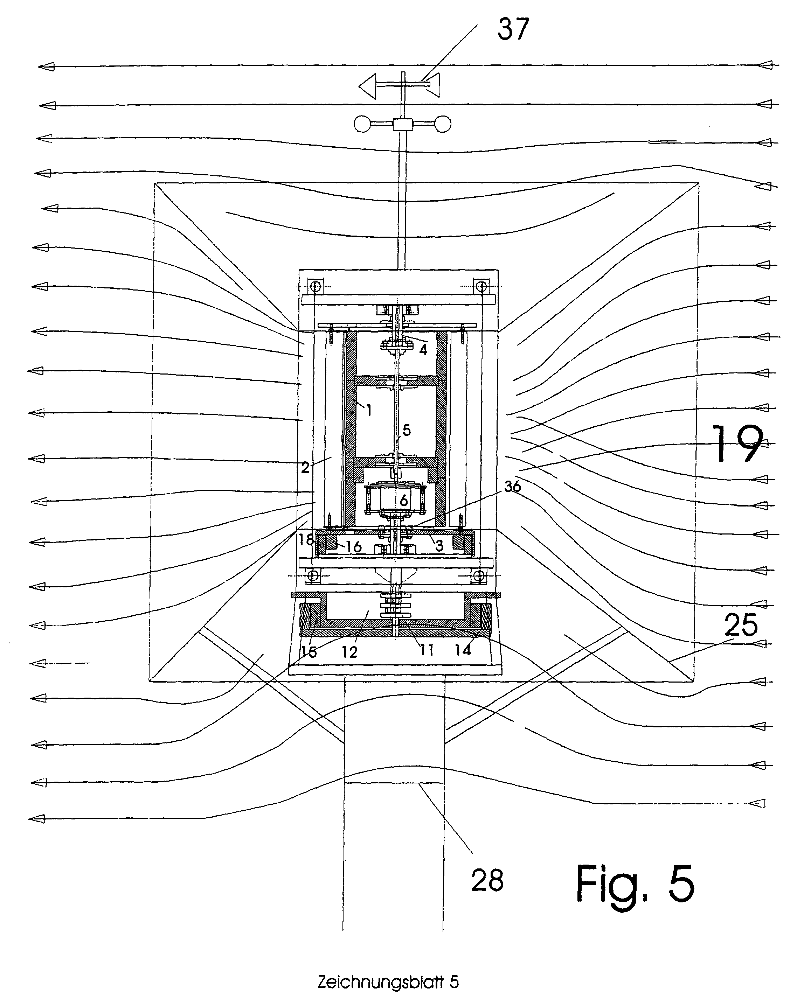

Die Zeichnungen sind durchweg Schematisch zu verstehen.
Die Erfindung wird durch das Prinzip der zweimaligen Erhöhung der freien Windgeschwindigkeit in **Fig.1 und 2** in der Draufsicht gezeigt. Die trichterförmig angeordneten Fluidfangflügel **(25)** vor den Turbinen erhöhen durch ihre Lage und Ausmaße die Fluidgeschwindigkeit durch den erzeugten Düseneffekt auf das Doppelte der freien Fluidgeschwindigkeit. Innerhalb der Turbinen erhöht sich die Fluidgeschwindigkeit auf der entstandenen Unterdruckseite **(23)** durch die in Drehung versetzten Zylinder wiederum auf das 3 bis 4 fache der Geschwindigkeit vor der Turbine. Die zwischen den exzentrisch zu den Zylindem versetzten freilaufenden Scheiben **(3)** (oben und unten) drehbar gelagerten Flügel **(2)**, bewegen sich durch den jeweils auf der Umlaufbahn eingestellten Anstellwinkel entstandenen horizontalen Auftriebsleistung um den Zylinder. Die entstandene Drehbewegung wird durch einen Vielpolringgenerator **(16, 18)**in elektrische Energie umgewandelt. Durch die sich exzentrisch um die Zylinder **(1)** drehenden im Umlauf verstellbaren Flügel **(2)** wird der nutzbare Leistungsbereich **(23)** in seiner vollen Breite genutzt. In dem jeweils gegenüberliegenden Überdruckbereich **(24)** werden die Flügel mit geringstmöglichen Abstand zum sich schneller drehenden Zylinder mit dem Flügelrückkante (also dem geringstmöglichen Widerstandsbeiwert) wieder in den Leistungsbereich geführt wobei die optimale Steigungsleistung durch die Verstelleinheiten **(32)** am Anfang des Leistungsbereiches wiederum eingestellt wird. Dies ist nur mit einer außerordentlich schnellen Infrarotdatenübertragungsanlage und entsprechend entwickelten elektronischen Stellelementen zu verwirklichen. Die beiden Rotoren **(1)** werden so zueinander gestellt, daß der größtmögliche Leistungsbereich genutzt werden kann und die Translationsbewegung **(29)** durch gleichförmige lineare Schwingungsbewegungen, über einen Kurbeltrieb **(11) Fig.3, 4 und 5** einen oder zwei weitere Vielpolringgenerator/en **(14,15)** in zusätzlich elektrische Energie umgewandelt.

Die Erfindung zeigt in der Ansicht **Fig. 3, 4 und 5** ein auf einem Mastdrehkranz **(28)** befestigten Grundrahmen **(10)** welcher die Linearführungsschienen bzw. säulen **(9)** über fest am Rahmen und an den Führungsschienen bzw. Wellen angebrachte Lagerböcke **(8a)** die die beiden Turbinenrahmen **(7)** über wiederum fest angebrachte Linearkugellagerböcke **(8)** tragen und ihre lineare Bewegungsfreiheit erhalten. In den Turbinenrahmen **(7)** ist die Lagerung der Turbine befestigt, an deren inneren Endachsen **(4)** die versetzt angebrachten Zylinderachsen **(5)** einschl. des Zylinderantriebes **(6)** befestigt sind. Um die Endachsen **(4)** sind die freilaufenden Scheiben **(3),** an welchen die Flügel **(2)** drehbar **(2a)** befestigt sind, mit Kugellagern befestigt. Unterhalb der freilaufenden unteren Scheibe **(3a)** ist ein Vielpolringgenerator **(16)** angebracht, dessen Statorseite **(18)** am Turbinenrahmen **(7)** fest angebracht ist. Über jeweils zwei fest an den Turbinenrahmen **(7)** angebrachten Achsen **(12)** sind jeweils eine Pleulstange **(12a),** welche eine Kurbelwelle **(11)** mit einem am Kurbelwellenende fest angebrachten Vielpohlringgenerator **(14, 15)** durch die mittels eines elektrischen Starters **(14a)** und die Nutzung der Translationsbewegungsenergie **(29)** in Schwingung gebrachten Turbinenrahmen **(7)** wird elektrische Energie erzeugt. Die Windfandflügel **(25)** sind am Grundrahmen mit Scharnieren so befestigt, daß diese bei freien Windgeschwindigkeiten ab 25m/s in den Wind klappen um den seitlichen Belastungsdruck des Mastes zu verringern. Bei normaler Windgeschwindigkeit unterhalb 25m/s gehen die Fangflügel automatisch hydraulisch, pneumatisch oder durch Federn wieder in die Trichterform zurück.
Die Translationsenergiebewegung wird durch wechselseitige elektronisch geregelten Zylinderdrehzahlen erzeugt.

## Patentansprüche

1. Wind - bzw. Wasser- Energieanlage mit einem oder mehreren um seine vertikal ausgerichteten Achsen (**5**) in Drehung versetzten Zylinder (**1**), um den an zweier oder mehreren freilaufenden Scheiben (**3**) - oben und unten - mehrere aerodynamischen Flügel (**2**) zentrisch an den freilaufenden Scheiben (**3**) befestigt sind, wobei der bzw. die im anströmenden Fluid **(19)** drehenden Zylinder **(1)** auf der Unterdruckseiten **(23)** eine beschleunigte Zirkulationsströmung erzeugen, so dass die sich im Leistungsbereich um den Zylinder **(1)** drehenden Flügel **(2)** das erzeugte Auftriebsmoment in mechanische bzw. elektrische Energie **(16)** umwandelt, **dadurch gekennzeichnet, dass** die aerodynamischen Flügel **(2)** schwenkbar verstellbar um seine vertikale Achsen **(2a)** befestigt sind und daß die freilaufenden Scheiben **(3)** um eine exzentrisch zum Zylinder bzw. mehrere Zylinder **(1)** angeordnete Achse **(4)** dreht.

2. Wind- bzw. Wasser- Energieanlage nach Anspruch 1 **dadurch gekennzeichnet, daß** der anströmende Wind **(19)** durch verschieden gestaltete Fluidfangflügel **(25)** die so angeordnet sind, daß in Abhängigkeit der Größe zur Vertikalturbine ein Düseneffekt **(26)** vor erreichen der Turbine entsteht und damit eine Erhöhung der Windgeschwindigkeit erreicht wird.

3. Wind- bzw. Wasser- Energieanlage nach Anspruch 1 und 2 **dadurch gekennzeichnet, daß** die Windfangflügel teilweise bei Starkwind und Sturm automatisch in Windrichtung klappen und bei Normalwind in ihre Windfangposition automatisch, hydraulisch, pneumatisch oder durch Federkraft zurückkehren.

4. Wind- bzw. Wasser- Energieanlage nach Anspruch 1 und 2 **dadurch gekennzeichnet, daß** die elektrisch Energie durch einen oder mehrere Vielpol- Generatoren bzw. Ringgeneratoren **(16,18)** erzeugt werden.

5. Wind- bzw. Wasser- Energieanlage nach Anspruch 1 und 2 **dadurch gekennzeichnet, daß** die so beschriebene Wind- bzw. Wasserenergieanlage drehbar **(28)** nach dem anströmenden freien Wind oder Wasser auf einem feststehenden oder ausfahrbaren Mast **(27)** befestigt ist.

6. Wind- bzw. Wasser- Energieanlage nach Anspruch 1 und 2 **dadurch gekennzeichnet, daß** der durch einen elektrischen oder mechanischen Antrieb **(6)** in Drehung versetzte Zylinder **(1)** in Abhängigkeit des gemessenen **(37)** anströmenden freien Windes bzw. Wassers drehzahlgeregelt wird, so daß die Umfangsgeschwindigkeit **(21)** der Zirkulationsströmung **(23a)** auf der entstehenden Unterdruckseite **(23)** oder Zone des Zylinders **(1)** 3 bis 4-fach höher ist als die vor der Turbine im Düseneffekt entstandenen Strömungsgeschwindigkeit **(22)**.

7. Wind- bzw. Wasser- Energieanlage nach Anspruch 1 und 2 **dadurch gekennzeichnet, daß** die Windflügel **(2)** als aerodynamische Flugprofile mit vor der Flügelkante angebrachten Vorflügeln **(2b)** zur Leistungssteigerung bei schwachem Wind versehen sind.

8. Wind- bzw. Wasser- Energieanlage nach Anspruch 1 und 2 **dadurch gekennzeichnet, daß** die Windflügel **(2)** auch aus Abschnitten oder Segmenten bestehen sowie mit Versteifungsringen (3a) an den Schwenkachsen **(2a)** gelagert, umlaufend verbunden sein können. **(Fig. 9)**

9. Wind- bzw. Wasser- Energieanlage nach Anspruch 1 und 2 **dadurch gekennzeichnet, daß** die Windflügel **(2)** an den frei drehbar gelagerten Turbinenscheiben mittig verstellbar gelagert werden, **dadurch gekennzeichnet, daß** die Flügel an ihren Enden an der Schwenkachse fest mit den Flügelstirnflächen verbundenen Scheiben **(30)** jeweils eine Kupplungsverbindung die mit Hilfe einer Schubstange **(31)** verbunden an elektromagnetischen Hub- bzw. Schubmagneten **(32)** elektronisch geregelt werden und jede einzeln individuell auf ihrem Umlaufweg in den verschiedenen Umlaufzonen verstellt werden.

10. Wind- bzw. Wasser- Energieanlage nach einem der Ansprüche 1 bis 7 **dadurch gekennzeichnet, daß** zwei oder mehrere Turbinen gegen- oder gleichläufig, im Abstand von mindestens dem Doppelten der jeweiligen Breite des Strömungsfeldes **(23)** entspricht, angeordnet sind. **(Fig. 2,3,4)**

## Claims

1. Wind- or water power devices, having one or more cylinders **(1)** set into a revolving motion around its vertically aligned axes **(5);** around which are fastened to two or more freewheeling discs-at the top and at the bottom-several aerodynamic vanes **(2),** these being centrally fastened to the freewheeling discs **(3),** causing the one or several cylinder/s **(1)** tuming in the approaching fluid **(19)** to generate an accelerated circulating flow on the vacuum sides of the vanes **(23)** so that the vanes **(2)** revolving around the cylinder **(1)** in the power range translate the thus generated lifting momentum into mechanical or electrical energy **(16),** respectively, the characteristic of the device being that the aerodynamic vanes **(2)** are attached around the vertical axes **(2a)** in a manner allowing for adjustment by tilting, and that the freewheeling discs **(3)** are revolving around an axis (4) arranged in an off-centre position vis-à-vis the cylinder or the several cylinders **(1),** respectively.

2. Wind- or water power device according to claim 1 **characterised by** the fact that wind or water flowing against it **(19)** is conducted through fluid collector vanes **(25)** of various design that are arranged in such a way as to create, depending on the size of the vertical turbine, a jet effect **(26)** before the flow reaches the turbine, and as to thereby achieve an increase in wind velocity.

3. Wind- or water power device according to claims 1 and 2 **characterised by** the fact that some of the wind collector vanes automatically align themselves with the direction of the wind during strong wind or storm conditions, and automatically return into their wind collecting position during normal wind conditions by means of hydraulic, pneumatic or spring-loaded power.

4. Wind- or water power device according to claims 1 and 2 **characterised by** the fact that the electrical power is generated by the use of one or more multi-pole generators or ring generators **(16,18).**

5. Wind- or water power device according to claims 1 and 2 **characterised by** the fact that the thus described wind or water power device is mounted on a stationary or retractable tower **(27)** in such a manner as to allow the device to be turned into the free flowing wind or water **(28).**

6. Wind- or water power device according to claims 1 and 2 **characterised by** the fact that the revolutions per minute of the cylinder **(1),** put into revolving motion by an electrical or mechanical drive **(6),** can be regulated in dependence of the free flowing wind or water so that the peripheral velocity **(21)** of the circulating flow **(23a)** on the resultant vacuum sides **(23)** or cylinder zone **(1)** is three to four times higher than the flow velocity achieved through the jet effect **(22)** prior to entry into the turbine.

7. Wind- or water power device according to claims 1 and 2 **characterised by** the fact that the wind vanes **(2),** designed as aerodynamic air profiles, are equipped with leading edge flaps **(2b)** to increase the power performance during calm wind conditions.

8. Wind- or water power device according to claims 1 and 2 **characterised by** the fact that the wind vanes **(2)** are also made of sections or segments, and may moreover be linked through stiffening rings **(3a)**, supported at the pivot axes **(2a). (Fig. 9)**

9. Wind- or water power device according to claims 1 and 2 **characterised by** the fact that the wind vanes **(2)** are bearing-mounted in such a manner as to allow for central adjustment against the turbine discs bearing-mounted for free pivoting, and moreover **characterised by** the fact that the vanes have, at either end, discs **(30)** that are firmly attached to the pivot axis with the front- and end faces of the vanes, and that each of these is fitted with a coupling link electronically controlled with the help of a piston rod **(31)**, which is in turn connected to an electromagnetic lifting or thrusting magnet **(32)**, and that in this way each vane is individually adjusted while on its circulating course in the various circulation zones.

10. Wind- or water power device according to any of the claims 1 through 7 **characterised by** the fact that two or more turbines, rotating either in opposition or synchronously, are set up at a distance matching at least twice the width of their respective flow fields **(23). (Fig. 2,3,4)**

## Revendications

1. Installation de production d'énergie éolienne respectivement hydraulique avec un ou plusieurs cylindres **(1)** mis en rotation autour de leurs axes verticaux **(5)** autour desquels sont fixées en position centrée sur deux ou plusieurs disques tournant librement **(3)** - en haut et en bas - plusieurs ailes aérodynamiques **(2)**, le ou les cylindres **(1)** tournant dans le fluide soufflant **(19)** produisant un courant de circulation accéléré sur les faces en dépression **(23),** de sorte que les ailes **(2)** tournant dans le rayon d'action autour du cylindre **(1)** transforment le moment de poussée verticale produit en énergie mécanique respectivement électrique **(16), caractérisée par le fait que** les ailes **(2)** aérodynamiques sont fixées de façon à être orientables et pivotantes autour de leurs axes verticaux **(2a)** et que les disques **(3)** tournent librement autour d'un axe **(4)** placé en position excentrique par rapport au/x cylindre/s **(1).**

2. Installation de production d'énergie éolienne respectivement hydraulique d'après la revendication numéro 1, **caractérisée par le fait que** le vent soufflant **(19)** à travers des ailes de captage du fluide différemment conformées **(25)** et placées de façon à produire, selon la taille par rapport à la turbine verticale, un effet de tuyère **(26)** avant d'atteindre la turbine et ainsi une augmentation de la vitesse du vent.

3. Installation de production d'énergie éolienne respectivement hydraulique d'après la revendication numéro 1 et 2, **caractérisée par le fait qu'**en cas de vent fort et de tempête les ailes de captage du vent se rabattent partiellement automatiquement dans le sens du vent et reprennent, lorsque le vent est normal, leur position initiale de captage du vent par effet automatique, hydraulique, pneumatique ou par tension du ressort.

4. Installation de production d'énergie éolienne respectivement hydraulique d'après la revendication numéro 1 et 2, **caractérisée par le fait que** l'énergie électrique est produite par un ou plusieurs générateurs multipolaires respectivement générateurs circulaires **(16,18).**

5. Installation de production d'énergie éolienne respectivement hydraulique d'après la revendication numéro 1 et 2, **caractérisée par le fait que** l'installation de production d'énergie éolienne respectivement hydraulique ainsi décrite est fixée de façon à pivoter **(28)** selon le vent soufflant librement ou l'eau sur un mat fixe ou rétractable **(27)**.

6. Installation de production d'énergie éolienne respectivement hydraulique d'après la revendication 1 et 2 **caractérisée par le fait que** le réglage de la vitesse du cylindre **(1)** mis en rotation par propulsion électrique ou mécanique (**6**) dépend du vent soufflant librement mesuré (**37**) respectivement de l'eau, de sorte que la vitesse périphérique **(21)** du courant de circulation **(23a)** sur la face en dépression **(23)** produite ou zone du cylindre **(1)** est 3 à 4 fois supérieure à la vitesse d'écoulement **(22)** produite devant la turbine par effet de tuyère.

7. Installation de production d'énergie éolienne respectivement hydraulique d'après la revendication 1 et 2 **caractérisée par le fait que** les ailes de régulateur à vent **(2)**, en tant que profils d'aile aérodynamiques, sont équipées de becs mobiles **(2b)** fixés devant le bord de l'aile afin d'augmenter la puissance lorsque le vent est faible.

8. Installation de production d'énergie éolienne respectivement hydraulique d'après la revendication 1 et 2 **caractérisée par le fait que** les ailes de régulateur à vent **(2)** peuvent aussi se composer de tronçons ou de segments et être reliées par des anneaux de rigidité **(3a)** aux axes pivotants **(2a)** en pivotant sur palier. **(Graphique 9)**

9. Installation de production d'énergie éolienne respectivement hydraulique d'après la revendication 1 et 2 **caractérisée par le fait que** les ailes de régulateur à vent **(2)** sont montées sur palier sur les disques de turbine pivotant librement sur palier de façon à pouvoir être centrées, **caractérisée par le fait que** les ailes à leurs extrémités, les disques **(30)** fixés aux surfaces de contact sur l'axe pivotant, peuvent à l'aide d'un embrayage pouvant être réglé électroniquement à l'aide d'une bielle **(31)** reliée à des barreaux électromagnétiques de levée ou de poussée, être ajustées chacune individuellement pendant leur course dans les différentes zones de rotation.

10. Installation de production d'énergie éolienne ou hydraulique d'après les revendications 1 à 7 **caractérisée par le fait que** deux ou plusieurs turbines sont disposées en sens opposé ou dans le même sens, à un intervalle correspondant au moins au double de la largeur respective du champ d'écoulement **(23). (Graphiques 2, 3, 4)**
